# EUROPEAN PATENT APPLICATION

(11) **EP 4 800 831 A1**
(43) Date of publication of application: **02.09.2026**
(21) Application number: 24923518.5
(22) Date of filing: 11.12.2024
(51) Int. Cl.: H01M 50/552, H01M 50/553, H01M 50/543, H01M 50/531, H01M 50/20, H01M 50/516, H01M 50/147

(54) **BATTERY CELL, BATTERY, AND ELECTRICAL APPARATUS**

(30) Priority: 05.02.2024 CN 202420283218 U
(71) Applicant: Contemporary Amperex Technology Co., Limited, Ningde, Fujian 352100 (CN)
(72) Inventor: LIN, Denghua, Ningde, Fujian 352100 (CN); CAO, Mengkai, Ningde, Fujian 352100 (CN); HUANG, Shoujun, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: Lorenz Seidler Gossel Part. mbB
(86) International application number: PCT/CN2024/138557
(87) International publication number: WO 2025/167316

(57) **Abstract**

A battery cell (20), a battery (100), and an electrical apparatus. The battery cell (20) comprises: a housing (23), the housing (23) comprising a first wall (21); an electrode assembly (22), provided with a tab; an electrode terminal (25), disposed on the first wall (21), the electrode terminal (25) being used to connect to a busbar (30) of the battery (100); and an adapter (24), the adapter (24) being used to connect the tab and the electrode terminal (25). The electrode terminal (25) is formed having a first weld pool area (40) and a second weld pool area (41), the first weld pool area (40) being used to connect to the busbar (30), the second weld pool area (41) being connected to the adapter (24). The first weld pool area (40) and the second weld pool area (41) are staggered along a direction perpendicular to the thickness direction of the first wall (21).

## Description

### CROSS-REFERENCE TO RELATED APPLICATIONS

The present application is based on Application No. 202420283218.1, filed on February 5, 2024, and claims priority to the Chinese Patent Application, which is incorporated herein by reference in its entirety.

### TECHNICAL FIELD

The present application relates to the field of batteries, and in particular, to a battery cell, a battery, and an electric apparatus.

### BACKGROUND

In the related art, one end of an electrode terminal is connected to an adapting piece, and the opposite other end of the electrode terminal is connected to a connecting piece. Moreover, the connection between the electrode terminal and the adapting piece and the connection between the electrode terminal and the connecting piece are directly opposed along a thickness direction of the electrode terminal. In order to ensure the connection quality between the electrode terminal and the adapting piece and the connecting piece, an electrode terminal with a large thickness needs to be used. However, an electrode terminal with a large thickness not only has high production costs, but also occupies installation space, thereby affecting the electric capacity of the battery cell.

### SUMMARY

The present application aims to solve at least to some extent one of the technical problems in the related art.

In view of this, an objective of the present application is to propose a battery cell, where the thickness of the electrode terminal of the battery cell is small, which is conducive to reducing the production cost of the battery cell and is conducive to increasing the electric capacity of the battery cell.

According to a first aspect, embodiments of the present application provide a battery cell, including:
a housing, provided with an accommodating cavity, the housing including a first wall;
an electrode assembly, the electrode assembly being disposed in the accommodating cavity and being provided with a tab;
an electrode terminal, disposed on the first wall, and the electrode terminal being configured to connect to a busbar of a battery; and
an adapting member, the adapting member being configured to connect the tab and the electrode terminal; where
the electrode terminal is formed with a first weld pool region and a second weld pool region, the first weld pool region is configured to connect to the busbar, the second weld pool region is connected to the adapting member, and the first weld pool region and the second weld pool region are offset along a direction perpendicular to a thickness direction of the first wall.

In the above technical solution, by offsetting the first weld pool region and the second weld pool region along a direction perpendicular to the thickness direction of the first wall, the thickness of the electrode terminal can be reduced without affecting the connection quality between the electrode terminal and the adapting member and the busbar, thereby facilitating reduction of the production cost of the battery cell. In addition, reducing the thickness of the electrode terminal can reduce the installation space required for the electrode terminal, which is conducive to increasing the electric capacity of the battery cell.

According to a second aspect, embodiments of the present application further provide a battery, including a plurality of the above battery cells and a busbar, the busbar being configured to connect the first weld pool regions of the plurality of battery cells.

According to a third aspect, embodiments of the present application further provide an electric apparatus, including the above battery cell or including the above battery.

Additional aspects and advantages of the present application will be given in part in the following description, part of which will become apparent from the following description or be learned from the practice of the embodiments of the present application.

### BRIEF DESCRIPTION OF DRAWINGS

FIG. 1 is a schematic structural diagram of a vehicle according to some embodiments of the present application;
FIG. 2 is an exploded view of a structure of a battery according to some embodiments of the present application;
FIG. 3 is a schematic diagram of a connection between a battery cell and a busbar according to some embodiments of the present application;
FIG. 4 is a schematic exploded view of a battery cell and a busbar according to some embodiments of the present application;
FIG. 5 is a schematic diagram of a connection between another angle of a battery cell and a busbar according to some embodiments of the present application;
FIG. 6 is a cross-sectional view of C-C in FIG. 5;
FIG. 7 is a schematic diagram of an enlarged view at D in FIG. 6 (as one embodiment of the present application);
FIG. 8 is a schematic diagram of an enlarged view at D in FIG. 6 (as another embodiment of the present application);
FIG. 9 is a schematic diagram of an enlarged view at D in FIG. 6 (as yet another embodiment of the present application);
FIG. 10 is a schematic diagram of an electrode terminal according to some embodiments of the present application; and
FIG. 11 is a schematic exploded view of an electrode terminal according to some embodiments of the present application.

Reference signs in the specification are described as follows:
vehicle 1000; battery 100; controller 200; motor 300;
box 10; first box body 11; second box body 12; battery cell 20;
first wall 21; electrode assembly 22; housing 23; adapting member 24; electrode terminal 25; accommodating cavity 26;
first terminal body 251; first body segment 2511; second body segment 2512; first welding region 2513; boss structure 2514; through-hole structure 2515;
second terminal body 252; third body segment 2521; fourth body segment 2522; second welding region 2523; recess structure 2524;
negative electrode terminal 253; positive electrode terminal 254;
busbar 30; first weld pool region 40; and second weld pool region 41.

### DETAILED DESCRIPTION OF EMBODIMENTS

To make the objectives, technical solutions, and advantages of the embodiments of the present application clearer, the following clearly describes the technical solutions in the embodiments of the present application with reference to the accompanying drawings in the embodiments of the present application. Apparently, the described embodiments are some but not all of the embodiments of the present application. All other embodiments obtained by persons of ordinary skill in the art based on some embodiments of the present application without creative efforts shall fall within the protection scope of the present application.

Unless otherwise defined, all technical and scientific terms used in the present application shall have the same meanings as commonly understood by persons skilled in the art to which the present application relates. The terms used in the specification of the present application are intended to merely describe the specific embodiments rather than to limit the present application. The terms "include", "comprise", and any variations thereof in the specification, claims, and brief description of drawings of the present application are intended to cover non-exclusive inclusions. In the specification, claims, or accompanying drawings of the present application, the terms "first", "second", and the like are intended to distinguish between different objects rather than to indicate a particular sequence or relative importance.

In the present application, reference to "embodiment" means that specific features, structures, or characteristics described with reference to the embodiment may be incorporated in at least one embodiment of the present application. The word "embodiment" appearing in various places in the specification does not necessarily refer to the same embodiment or an independent or alternative embodiment that is exclusive of other embodiments.

In the description of the present application, it should be noted that unless otherwise specified and defined explicitly, the terms "mounting", "connection", "join", and "attachment" should be understood in their general senses. For example, they may refer to a fixed connection, a detachable connection, or an integral connection, and may refer to a direct connection, an indirect connection via an intermediate medium, or an internal communication between two elements. Persons of ordinary skills in the art can understand specific meanings of these terms in the present application as appropriate to specific situations.

The term "and/or" in the present application is only an associative relationship for describing associated objects, indicating that three relationships may be present. For example, A and/or B may indicate the following three cases: presence of only A; presence of both A and B; and presence of only B. In addition, the character "/" in the present application generally indicates an "or" relationship between the contextually associated objects.

In the embodiments of the present application, the same reference signs denote the same components, and for brevity, in different embodiments, detailed descriptions of the same components are not repeated. It should be understood that as shown in the accompanying drawings, sizes such as thickness, length, and width of various components and sizes such as thickness, length, and width of integrated devices in the embodiments of the present application are merely for illustrative purposes and should not constitute any limitations on the present application.

In the present application, "a plurality of" means more than two (inclusive).

In the present application, a battery cell may be a lithium-ion secondary battery, a lithium-ion primary battery, a lithium-sulfur battery, a sodium-lithium-ion battery, a sodium-ion battery, a magnesium-ion battery, or the like. This is not limited in the embodiments of the present application. The battery cell may be flat, cuboid, or of other shapes. This is not limited in the embodiments of the present application. Battery cells are typically divided into prismatic battery cells and pouch battery cells according to the packaging method. The type of the battery cell is not limited in the embodiments of the present application either.

The battery mentioned in the embodiments of the present application is a single physical module that includes one or more battery cells for providing higher voltage and capacity. For example, the battery mentioned in the present application may include a battery module, a battery pack, or the like. A battery typically includes a box configured to enclose one or more battery cells or a plurality of battery modules. The box can prevent liquids or other foreign matter from affecting charging or discharging of the battery cells.

A battery cell includes a housing, an electrode assembly, and an electrolyte, where the housing is configured to accommodate the electrode assembly and the electrolyte. The electrode assembly consists of a positive electrode plate, a negative electrode plate, and a separator. The battery cell works mainly depending on migration of metal ions between the positive electrode plate and the negative electrode plate. The positive electrode plate includes a positive electrode current collector and a positive electrode active substance layer. A surface of the positive electrode current collector is coated with the positive electrode active substance layer. A positive electrode current collector uncoated with the positive electrode active substance layer protrudes out of a positive electrode current collector coated with the positive electrode active substance layer, and the positive electrode current collector uncoated with the positive electrode active substance layer serves as a positive electrode tab. A lithium-ion battery is used as an example, in which a positive electrode current collector may be made of aluminum, and a positive electrode active substance may be lithium cobaltate, lithium iron phosphate, ternary lithium, or lithium manganate. The negative electrode plate includes a negative electrode current collector and a negative electrode active substance layer. A surface of the negative electrode current collector is coated with the negative electrode active substance layer. A negative electrode current collector uncoated with the negative electrode active substance layer protrudes out of a negative electrode current collector coated with the negative electrode active substance layer, and the negative electrode current collector uncoated with the negative electrode active substance layer serves as a negative electrode tab. The negative electrode current collector may be made of copper, and the negative electrode active substance may be carbon, silicon, or the like. To allow a large current to pass through without any fusing, a plurality of positive electrode tabs are provided and stacked together, and a plurality of negative electrode tabs are provided and stacked together.

The separator may be made of PP (polypropylene, polypropylene) or PE (polyethylene, polyethylene), or the like. In addition, the electrode assembly may be a wound structure or a laminated structure. However, the embodiments of the present application are not limited thereto.

In recent years, new energy vehicles have developed by leaps and bounds, and in the field of electric vehicles, power batteries play an irreplaceable and crucial role as power sources for the electric vehicles. A battery consists of a box and a plurality of battery cells accommodated in the box. As a core component of new energy vehicles, batteries have high requirements in terms of both reliability and cycle life.

A battery includes a plurality of battery cells, the battery cells include electrode terminals, where one end of an electrode terminal is connected to an adapting piece, and the opposite other end of the electrode terminal is connected to a connecting piece. Moreover, the connection between the electrode terminal and the adapting piece and the connection between the electrode terminal and the connecting piece are directly opposed along a thickness direction of the electrode terminal. In order to ensure the connection quality between the electrode terminal and the adapting piece and the connecting piece, an electrode terminal with a large thickness needs to be used. However, an electrode terminal with a large thickness not only has high production costs, but also occupies installation space, thereby affecting the electric capacity of the battery cell.

Based on the above considerations, in order to solve the technical problem that an electrode terminal with a large thickness leads to high cost of the battery cell and affects the electric capacity of the battery cell, the present application provides a battery cell, including: a housing, provided with an accommodating cavity, the housing including a first wall; an electrode assembly, the electrode assembly being disposed in the accommodating cavity and being provided with a tab; an electrode terminal, disposed on the first wall, the electrode terminal being configured to connect to a busbar of a battery; and an adapting member, the adapting member being configured to connect the tab and the electrode terminal; where the electrode terminal is formed with a first weld pool region and a second weld pool region, the first weld pool region is configured to connect to the busbar, the second weld pool region is connected to the adapting member, and the first weld pool region and the second weld pool region are offset along a direction perpendicular to a thickness direction of the first wall.

In such a battery cell, by offsetting the first weld pool region and the second weld pool region along a direction perpendicular to the thickness direction of the first wall, the thickness of the electrode terminal can be reduced without affecting the connection quality between the electrode terminal and the adapting member and the busbar, thereby facilitating reduction of the production cost of the battery cell. In addition, reducing the thickness of the electrode terminal can reduce the installation space required for the electrode terminal, which is conducive to increasing the electric capacity of the battery cell.

The battery disclosed in the embodiments of the present application may be used in, but is not limited to, electric apparatuses such as vehicles, ships, or aircraft. The battery disclosed in the present application may be used to constitute a power supply system of the electric apparatus.

An embodiment of the present application provides an electric apparatus that uses a battery as a power source. The electric apparatus may be but is not limited to a mobile phone, a tablet, a laptop computer, an electric toy, an electric tool, an electric bicycle, an electric car, a ship, and a spacecraft. The electric toy may include a fixed or mobile electric toy, for example, a game console, an electric toy car, an electric toy ship, and an electric toy airplane. The spacecraft may include an airplane, a rocket, a space shuttle, a spaceship, and the like.

For ease of description, an electric apparatus according to an embodiment of the present application being a vehicle 1000 is used as an example for description of the following embodiments.

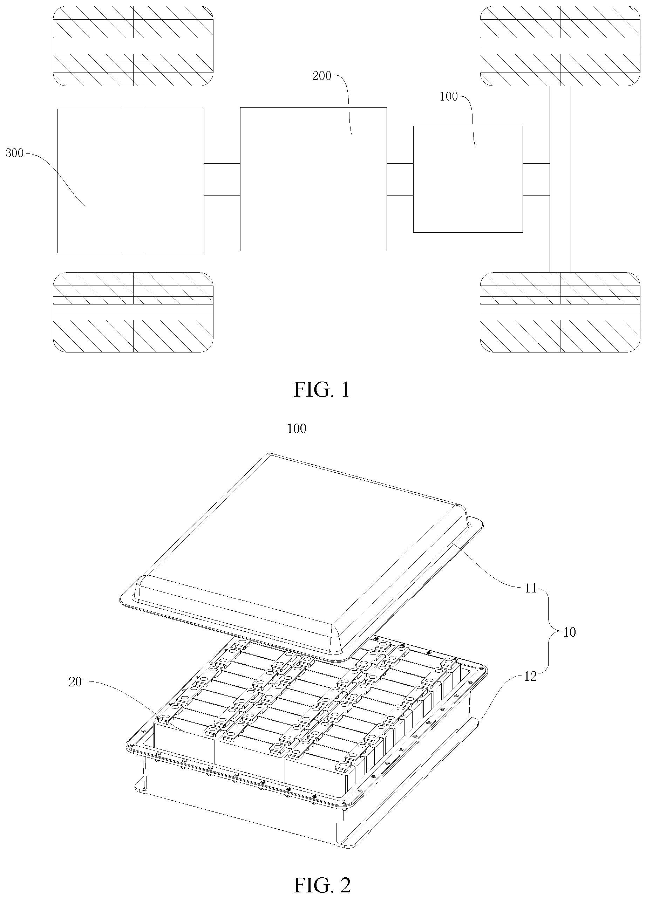

Referring to FIG. 1, FIG. 1 is a schematic structural diagram of the vehicle 1000 according to some embodiments of the present application. The vehicle 1000 may be a fossil fuel vehicle, a natural gas vehicle, or a new energy vehicle. The new energy vehicle may be a battery electric vehicle, a hybrid electric vehicle, a range-extended electric vehicle, or the like. The vehicle 1000 is provided with a battery 100 inside, where the battery 100 may be disposed at the bottom, front, or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy a working electricity need during start, navigation, and driving of the vehicle 1000.

In some embodiments of the present application, the battery 100 can be used as not only the operational power source for the vehicle 1000 but also a driving power source for the vehicle 1000, replacing or partially replacing fossil fuel or natural gas to provide driving traction for the vehicle 1000.

Referring to FIG. 2, FIG. 2 is an exploded view of a structure of a battery 100 according to some embodiments of the present application. The battery 100 includes a box 10 and a plurality of battery cells 20, where the battery cells 20 are configured to accommodate in the box 10. The box 10 is configured to provide an assembly space for the battery cells 20. The box 10 may be a variety of structures. In some embodiments, the box 10 may include a first box body 11 and a second box body 12. The first box body 11 and the second box body 12 are engaged with each other to jointly define an assembly space for accommodating the battery cells 20. The second box body 12 may be a hollow structure with one end open, the first box body 11 may be a plate structure, and the first box body 11 covers an open side of the second box body 12, so that the first box body 11 and the second box body 12 jointly define an assembly space. The first box body 11 and the second box body 12 may both be a hollow structure with one side open, and the open side of the first box body 11 is engaged with the open side of the second box body 12. Certainly, the box 10 formed by the first box body 11 and the second box body 12 may be various shapes, for example, a cube, a cuboid, or the like.

In the battery 100, the plurality of battery cells 20 may be connected in series, parallel, or series-parallel, where being connected in series-parallel means a combination of series and parallel connections of the plurality of battery cells 20. The plurality of battery cells 20 may be directly connected in series, parallel or series-parallel, and then an entirety of the plurality of battery cells 20 is accommodated in a box 10; or certainly, the battery 100 may be formed by a plurality of battery cells 20 being connected in series, parallel or series-parallel first to form a battery module and then a plurality of battery modules being connected in series, parallel or series-parallel to form an entirety which is accommodated in a box 10. The battery 100 may further include other structures. For example, the battery 100 may further include a busbar configured to implement electrical connection between the plurality of battery cells 20.

Each battery cell 20 may be a secondary battery or a primary battery, or may be a lithium-sulfur battery, a sodium-ion battery, or a magnesium-ion battery, without being limited thereto. The battery cell 20 may be flat, cuboid, or of other shapes.

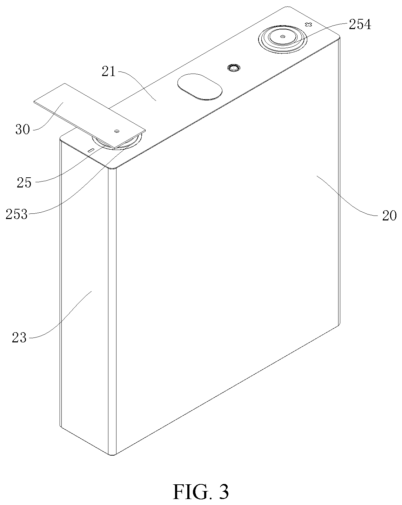

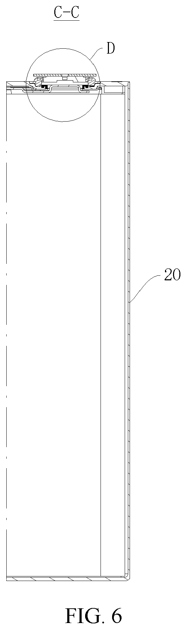

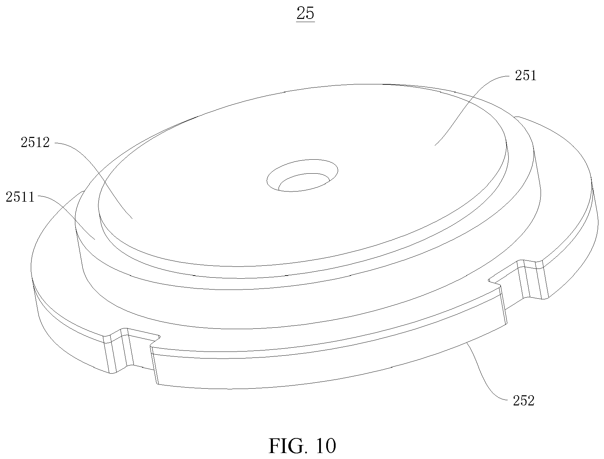

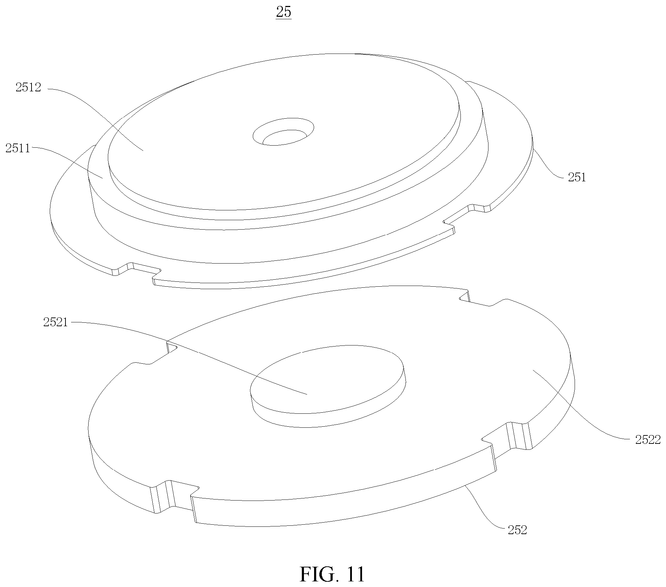

The battery cell 20 according to the embodiments of the present application is described below with reference to FIG. 3 to FIG. 11.

Referring to FIG. 3 to FIG. 11, a battery cell 20 according to the embodiments of the present application includes:
a housing 23, provided with an accommodating cavity 26, the housing 23 including a first wall 21;
an electrode assembly 22, the electrode assembly 22 being disposed in the accommodating cavity 26 and being provided with a tab;
an electrode terminal 25, disposed on the first wall 21, and the electrode terminal 25 being configured to connect to a busbar 30 of the battery 100; and
an adapting member 24, the adapting member 24 being configured to connect the tab and the electrode terminal 25; where
the electrode terminal 25 is formed with a first weld pool region 40 and a second weld pool region 41, the first weld pool region 40 is configured to connect to the busbar 30, the second weld pool region 41 is connected to the adapting member 24, and the first weld pool region 40 and the second weld pool region 41 are offset along a direction perpendicular to a thickness direction of the first wall 21.

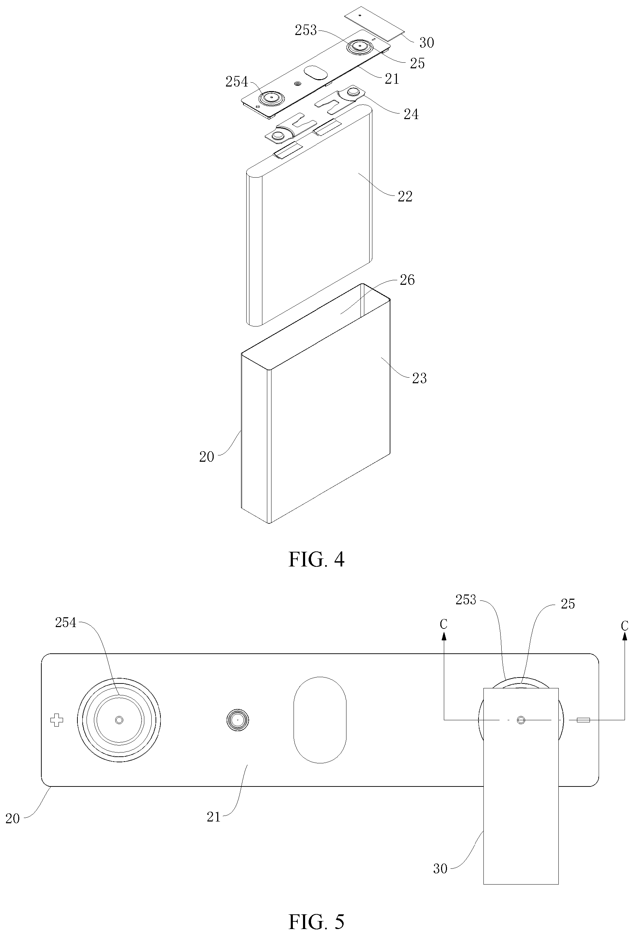

Referring to FIG. 3 and FIG. 4, the housing 23 is provided with an accommodating cavity 26, and the housing 23 includes a first wall 21. The electrode assembly 22 is provided with a tab, and the electrode assembly 22 is disposed in the accommodating cavity 26. The electrode terminal 25 is disposed on the first wall 21, and the electrode terminal 25 can be connected to the busbar 30 of the battery 100. The adapting member 24 is configured to connect the tab and the electrode terminal 25, that is, the adapting member 24 can be connected to the tab, and the electrode terminal 25 can be connected to the adapting member 24.

As some embodiments of the present application, the busbar 30 can be connected between two battery cells 20. For example, the busbar 30 can be connected between the electrode terminals 25 of two battery cells 20. Alternatively, the busbar 30 can be connected between the electrode terminal 25 of the battery cell 20 and other components. For example, the busbar 30 can be connected between the electrode terminal 25 of the battery cell 20 and a power distribution unit.

The electrode terminal 25 is formed with a first weld pool region 40 and a second weld pool region 41, where the first weld pool region 40 is configured to connect to the busbar 30, and the second weld pool region 41 is configured to connect to the adapting member 24. The first weld pool region 40 can be understood as a solid structure formed after cooling and solidification of a molten pool formed by melting a portion of a solid structure of the electrode terminal 25 and a portion of a solid structure of the busbar 30 through a welding process. Depending on different processes, the first weld pool region 40 may include some filler material (for example, but not limited to welding rod). The second weld pool region 41 can be understood as a solid structure formed after cooling and solidification of a molten pool formed by melting a portion of the solid structure of the electrode terminal 25 and a portion of a solid structure of the adapting member 24 through a welding process. Depending on different processes, the second weld pool region 41 may include some filler material (for example, but not limited to welding rod).

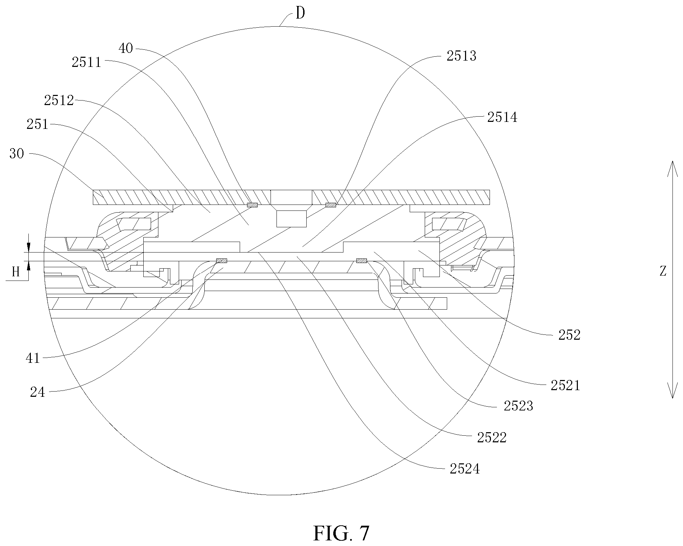

Along a direction perpendicular to the thickness direction (that is, the Z direction shown in FIG. 7) of the first wall 21, the first weld pool region 40 and the second weld pool region 41 are offset. For the direction perpendicular to the thickness direction (that is, the Z direction shown in FIG. 7) of the first wall 21, it can be understood as setting a plane perpendicular to the thickness direction (that is, the Z direction shown in FIG. 7) of the first wall 21. In other words, the thickness direction (that is, the Z direction shown in FIG. 7) of the first wall 21 is parallel to a normal of the plane, and along a direction parallel to the plane, the first weld pool region 40 and the second weld pool region 41 are offset.

Along a direction perpendicular to the thickness direction (that is, the Z direction shown in FIG. 7) of the first wall 21, a first welding region 2513 and a second welding region 2523 are offset. It can be understood as setting a plane perpendicular to the thickness direction (that is, the Z direction shown in FIG. 7) of the first wall 21, along the thickness direction of the first wall 21 (that is, the Z direction shown in FIG. 7), an orthographic projection of the first weld pool region 40 on the plane partially overlaps with an orthographic projection of the second weld pool region 41 on the plane, that is, a part of the orthographic projection of the first weld pool region 40 on the plane overlaps with the orthographic projection of the second weld pool region 41 on the plane, and another part of the orthographic projection of the first weld pool region 40 on the plane does not overlap with the orthographic projection of the second weld pool region 41 on the plane. Alternatively, along the thickness direction (that is, the Z direction shown in FIG. 7) of the first wall 21, the orthographic projection of the first weld pool region 40 on the plane does not overlap with the orthographic projection of the second weld pool region 41 on the plane, that is, the orthographic projection of the first weld pool region 40 on the plane and the orthographic projection of the second weld pool region 41 on the plane have no overlapping portion.

It should be explained that if the first weld pool region 40 and the second weld pool region 41 are directly opposed along a direction perpendicular to the thickness direction (that is, the Z direction shown in FIG. 7) of the first wall 21, in order not to affect the connection quality between the electrode terminal 25 and the adapting member 24 and the busbar 30, the thickness of the electrode terminal 25 needs to be increased to elongate the heat transfer path between the first weld pool region 40 and the second weld pool region 41. An electrode terminal 25 with a large thickness not only has high production costs, but also occupies installation space, thereby affecting the electric capacity of the battery cell 20.

By offsetting the first weld pool region 40 and the second weld pool region 41 along a direction perpendicular to the thickness direction (that is, the Z direction shown in FIG. 7) of the first wall 21, compared with the prior art, the influence of heat generated when welding the electrode terminal 25 to the busbar 30 on the connection between the electrode terminal 25 and the adapting member 24 can be reduced, or the influence of heat generated when welding the electrode terminal 25 to the adapting member 24 on the connection between the electrode terminal 25 and the busbar 30 can be reduced. This can be understood as, due to offsetting the first weld pool region 40 and the second weld pool region 41 along a direction perpendicular to the thickness direction (that is, the Z direction shown in FIG. 7) of the first wall 21, when welding at one place, the distance for heat transfer to the other place becomes longer, that is, the heat transfer path between the first weld pool region 40 and the second weld pool region 41 can be elongated. Therefore, this arrangement can reduce the thickness of the electrode terminal 25 without affecting the connection quality between the electrode terminal 25 and the adapting member 24 and the busbar 30.

For example, assuming that the first weld pool region 40 and the second weld pool region 41 are not offset along a direction perpendicular to the thickness direction (that is, the Z direction shown in FIG. 7) of the first wall 21, to ensure connection quality, the thickness of one electrode terminal 25 needs to be set to 10 mm, that is, the heat transfer path between the first weld pool region 40 and the second weld pool region 41 is 10 mm. Moreover, by offsetting the first weld pool region 40 and the second weld pool region 41 along a direction perpendicular to the thickness direction (that is, the Z direction shown in FIG. 7) of the first wall 21, under the premise of ensuring that the heat transfer path between the first weld pool region 40 and the second weld pool region 41 is 10 mm, the thickness of the electrode terminal 25 may be set to less than 10 mm.

Therefore, by offsetting the first weld pool region 40 and the second weld pool region 41 along a direction perpendicular to the thickness direction (that is, the Z direction shown in FIG. 7) of the first wall 21, the thickness of the electrode terminal 25 can be reduced without affecting the connection quality between the electrode terminal 25 and the adapting member 24 and the busbar 30, reducing the thickness of the electrode terminal 25 can reduce the production cost of the battery cell 20. In addition, reducing the thickness of the electrode terminal 25 can reduce the space occupied by the electrode terminal 25 (that is, reducing the thickness of the electrode terminal 25 can reduce the installation space required for the electrode terminal 25), thereby leaving more space for arranging the electrode assembly 22 of the battery cell 20, and thus increasing the electric capacity of the battery cell 20.

In the above technical solution, by offsetting the first weld pool region 40 and the second weld pool region 41 along a direction perpendicular to the thickness direction of the first wall 21, the thickness of the electrode terminal 25 can be reduced without affecting the connection quality between the electrode terminal 25 and the adapting member 24 and the busbar 30, thereby facilitating reduction of the production cost of the battery cell 20. In addition, reducing the thickness of the electrode terminal 25 can reduce the installation space required for the electrode terminal 25, which is conducive to increasing the electric capacity of the battery cell 20.

According to some embodiments of the present application, along the thickness direction of the first wall 21, the orthographic projection of the first weld pool region 40 and the orthographic projection of the second weld pool region 41 are completely offset.

It can be understood as setting a plane perpendicular to the thickness direction (that is, the Z direction shown in FIG. 7) of the first wall 21, along the thickness direction (that is, the Z direction shown in FIG. 7) of the first wall 21, the orthographic projection of the first weld pool region 40 on the plane does not overlap with the orthographic projection of the second weld pool region 41 on the plane, that is, the orthographic projection of the first weld pool region 40 on the plane and the orthographic projection of the second weld pool region 41 on the plane have no overlapping portion.

In the above technical solution, by completely offsetting the orthographic projection of the first weld pool region 40 and the orthographic projection of the second weld pool region 41, the thickness of the electrode terminal 25 can be further reduced without affecting the connection quality between the electrode terminal 25 and the adapting member 24 and the busbar 30, which is conducive to further reducing the production cost of the battery cell 20.

As some embodiments of the present application, the electrode terminal 25 may be constructed as an integral piece, that is, the electrode terminal 25 is integrally formed, and the material of the electrode terminal 25 may be sodium, which is conducive to reducing the production difficulty of the electrode terminal 25.

According to some embodiments of the present application, referring to FIG. 7 to FIG. 11, the electrode terminal 25 includes a first terminal body 251 and a second terminal body 252 stacked along the thickness direction of the first wall 21. The first terminal body 251 is located on a side of the second terminal body 252 away from the accommodating cavity 26, and a surface of the first terminal body 251 has a first welding region 2513 corresponding to the first weld pool region 40. A surface of the second terminal body 252 has a second welding region 2523 corresponding to the second weld pool region 41. The first welding region 2513 and the second welding region 2523 are offset along a direction perpendicular to the thickness direction of the first wall 21.

The first terminal body 251 has a connected first body segment 2511 and second body segment 2512. The first body segment 2511 and the second body segment 2512 are arranged along a direction perpendicular to the thickness direction of the first wall 21, and a surface of the first body segment 2511 is formed with the first welding region 2513. Along the thickness direction of the first wall 21, a thickness of the first body segment 2511 is greater than a thickness of the second body segment 2512.

The electrode terminal 25 includes a first terminal body 251 and a second terminal body 252. Along the thickness direction (that is, the Z direction shown in FIG. 7) of the first wall 21, the first terminal body 251 and the second terminal body 252 are stacked.

As some embodiments of the present application, the first terminal body 251 and the second terminal body 252 are integral pieces, that is, the first terminal body 251 and the second terminal body 252 are integrally formed, and both the first terminal body 251 and the second terminal body 252 are sodium.

As some embodiments of the present application, the first terminal body 251 and the second terminal body 252 are stacked, and the materials of the first terminal body 251 and the second terminal body 252 may be different. For example, the material of the first terminal body 251 may be aluminum (that is, the first terminal body 251 may be constructed as an aluminum piece), and the material of the second terminal body 252 may be copper (that is, the second terminal body 252 may be constructed as a copper piece). Alternatively, the material of the first terminal body 251 may be aluminum (that is, the first terminal body 251 may be constructed as an aluminum piece), and the material of the second terminal body 252 may be nickel (that is, the second terminal body 252 may be constructed as a nickel piece). By making the materials of the first terminal body 251 and the second terminal body 252 different, the materials of the adapting member 24 and the busbar 30 can be adapted, which is conducive to improving the connection stability between the electrode terminal 25 and the adapting member 24 and the busbar 30.

As some embodiments of the present application, the first terminal body 251 and the second terminal body 252 are stacked, and the materials of the first terminal body 251 and the second terminal body 252 may be the same. For example, the materials of both the first terminal body 251 and the second terminal body 252 may be sodium, which is conducive to reducing the production difficulty of the electrode terminal 25.

The first terminal body 251 is located on a side of the second terminal body 252 away from the accommodating cavity 26, a surface of the first terminal body 251 has a first welding region 2513, and the first welding region 2513 corresponds to the first weld pool region 40. As some embodiments of the present application, the first welding region 2513 is connected to the first weld pool region 40. A surface of the second terminal body 252 has a second welding region 2523, and the second welding region 2523 corresponds to the second weld pool region 41. As some embodiments of the present application, the second welding region 2523 can be connected to the second weld pool region 41.

For the first welding region 2513 and the second welding region 2523 being offset along a direction perpendicular to the thickness direction of the first wall 21, it can be understood as setting a plane perpendicular to the thickness direction (that is, the Z direction shown in FIG. 7) of the first wall 21, along the thickness direction (that is, the Z direction shown in FIG. 7) of the first wall 21, an orthographic projection of the first welding region 2513 on the plane partially overlaps with an orthographic projection of the second welding region 2523 on the plane, that is, a part of the orthographic projection of the first welding region 2513 on the plane overlaps with the orthographic projection of the second welding region 2523 on the plane, and another part of the orthographic projection of the first welding region 2513 on the plane does not overlap with the orthographic projection of the second welding region 2523 on the plane. Alternatively, along the thickness direction (that is, the Z direction shown in FIG. 7) of the first wall 21, the orthographic projection of the first welding region 2513 on the plane does not overlap with the orthographic projection of the second welding region 2523 on the plane, that is, the orthographic projection of the first welding region 2513 on the plane and the orthographic projection of the second welding region 2523 on the plane have no overlapping portion.

It should be explained that after the electrode terminal 25 is welded and connected to the busbar 30, the electrode terminal 25 is formed with a first weld pool region 40, and the first weld pool region 40 is connected between the first terminal body 251 and the busbar 30. The first welding region 2513 can be understood as the region where the first terminal body 251 is connected to the first weld pool region 40. After the electrode terminal 25 is welded and connected to the adapting member 24, the electrode terminal 25 is formed with a second weld pool region 41, and the second weld pool region 41 is connected between the second terminal body 252 and the adapting member 24. The second welding region 2523 can be understood as the region where the second terminal body 252 is connected to the second weld pool region 41.

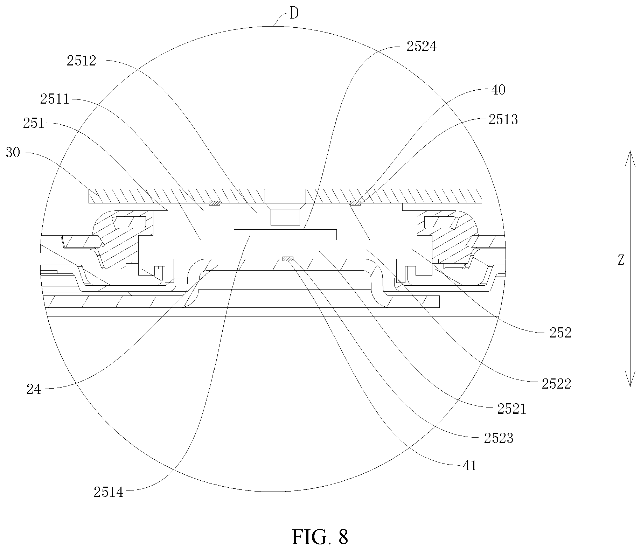

Referring to FIG. 7 to FIG. 11, the first terminal body 251 has a first body segment 2511 and a second body segment 2512, where the first body segment 2511 and the second body segment 2512 are connected. As some embodiments of the present application, the first body segment 2511 and the second body segment 2512 may be integrally formed, that is, the first body segment 2511 and the second body segment 2512 may be constructed as an integral piece. The first body segment 2511 and the second body segment 2512 are arranged along a direction perpendicular to the thickness direction (that is, the Z direction shown in FIG. 7) of the first wall 21. As some embodiments of the present application, referring to FIG. 8, the first body segment 2511 may be sleeved outside the second body segment 2512. Alternatively, referring to FIG. 7, the second body segment 2512 may be sleeved outside the first body segment 2511. A surface of the first body segment 2511 may be formed with the first welding region 2513, and along the thickness direction (that is, the Z direction shown in FIG. 7) of the first wall 21, the thickness of the first body segment 2511 is greater than the thickness of the second body segment 2512.

In the above technical solution, by making the electrode terminal 25 include the first terminal body 251 and the second terminal body 252 stacked along the thickness direction of the first wall 21, the electrode terminal 25 can be manufactured from the same material or from different materials according to requirements, and the materials of the adapting member 24 and the busbar 30 can be adapted, which is conducive to improving the connection stability between the electrode terminal 25 and the adapting member 24 and the busbar 30. In addition, by making the surfaces of the first terminal body 251 and the second terminal body 252 respectively have the first welding region 2513 and the second welding region 2523, it can facilitate connecting the electrode terminal 25 to the adapting member 24 and the busbar 30.

By making the first terminal body 251 have the connected first body segment 2511 and second body segment 2512 with different thicknesses, and making the relatively thicker first body segment 2511 formed with the first welding region 2513, sufficient weld penetration can be provided for the connection between the first body segment 2511 and the busbar 30, which can improve the connection reliability between the first body segment 2511 and the busbar 30. In addition, by making the relatively thicker first body segment 2511 formed with the first welding region 2513, the influence of the connection process between the first body segment 2511 and the busbar 30 on the connection between the second terminal body 252 and the adapting member 24 can be reduced, which is conducive to ensuring the connection reliability between the second terminal body 252 and the adapting member 24.

According to some embodiments of the present application, referring to FIG. 7 to FIG. 11, the second terminal body 252 has a connected third body segment 2521 and fourth body segment 2522, where the third body segment 2521 and the fourth body segment 2522 are arranged along a direction perpendicular to the thickness direction, and a surface of the third body segment 2521 is formed with the second welding region 2523. Along the thickness direction of the first wall 21, a thickness of the third body segment 2521 being greater than a thickness of the fourth body segment 2522.

The third body segment 2521 and the fourth body segment 2522 are connected. As some embodiments of the present application, the third body segment 2521 and the fourth body segment 2522 may be integrally formed, that is, the third body segment 2521 and the fourth body segment 2522 may be constructed as an integral piece. The third body segment 2521 and the fourth body segment 2522 are arranged along a direction perpendicular to the thickness direction (that is, the Z direction shown in FIG. 7) of the first wall 21. As some embodiments of the present application, referring to FIG. 7, the third body segment 2521 may be sleeved outside the fourth body segment 2522. Alternatively, referring to FIG. 8, the fourth body segment 2522 may be sleeved outside the third body segment 2521.

A surface of the third body segment 2521 may be formed with the second welding region 2523. Along the thickness direction (that is, the Z direction shown in FIG. 7) of the first wall 21, the thickness of the third body segment 2521 is greater than the thickness of the fourth body segment 2522.

In the above technical solution, by making the second terminal body 252 have the connected third body segment 2521 and fourth body segment 2522 with different thicknesses, and making the relatively thicker third body segment 2521 formed with the second welding region 2523, sufficient weld penetration can be provided for the connection between the third body segment 2521 and the adapting member 24, which can improve the connection reliability between the third body segment 2521 and the adapting member 24.

According to some embodiments of the present application, referring to FIG. 7, the thickness of the fourth body segment 2522 is greater than or equal to 0.1 mm.

As some embodiments of the present application, referring to FIG. 7, along the thickness direction (that is, the Z direction shown in FIG. 7) of the first wall 21, the thickness of the fourth body segment 2522 may be H, and H may be any value greater than or equal to 0.1 mm. For example, the thickness of the fourth body segment 2522 may be, but is not limited to, 0.1 mm, 0.2 mm, 0.3 mm, 0.4 mm, 0.5 mm, and the like. As some optional embodiments of the present application, along the thickness direction (that is, the Z direction shown in FIG. 7) of the first wall 21, the maximum thickness of the fourth body segment 2522 is 3 mm, that is, the thickness H of the fourth body segment 2522 may satisfy the relational expression: 0.1 mm ≤ H ≤ 3 mm. For example, the thickness of the fourth body segment 2522 may be, but is not limited to, 0.1 mm, 0.2 mm, 0.3 mm, 0.4 mm, 0.5 mm, 1 mm, 2 mm, 3 mm, and the like.

In the above technical solution, by making the thickness of the fourth body segment 2522 greater than or equal to 0.1 mm, the probability of exposure of the surface of the first terminal body 251 close to the second terminal body 252 can be reduced. It should be explained that when the surface of the first terminal body 251 close to the second terminal body 252 is exposed, the exposed portion is corroded after contacting the electrolyte of the battery cell 20. Therefore, by making the thickness of the fourth body segment 2522 greater than or equal to 0.1 mm, it is conducive to improving the reliability in use of the electrode terminal 25.

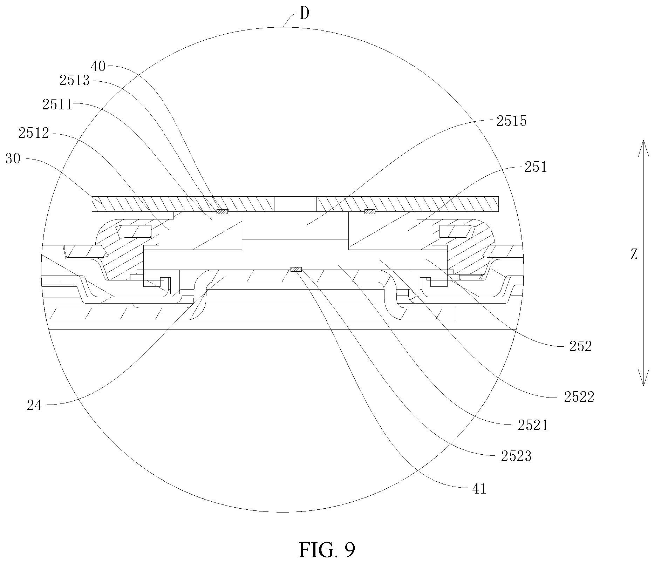

According to some embodiments of the present application, referring to FIG. 8 and FIG. 9, along a direction perpendicular to the thickness direction of the first wall 21, the second welding region 2523 is located at a central position of the second terminal body 252, and the first welding region 2513 is located outside the second welding region 2523.

Setting a plane perpendicular to the thickness direction (that is, the Z direction shown in FIG. 7) of the first wall 21, along the thickness direction (that is, the Z direction shown in FIG. 7) of the first wall 21, the second welding region 2523, the second terminal body 252, and the first welding region 2513 all have orthographic projections on the plane. Along a direction perpendicular to the thickness direction (that is, the Z direction shown in FIG. 7) of the first wall 21, the orthographic projection of the second welding region 2523 on the plane is located at the central position of the orthographic projection of the second terminal body 252 on the plane, and the orthographic projection of the first welding region 2513 on the plane is located outside the orthographic projection of the second welding region 2523 on the plane.

As some embodiments of the present application, referring to FIG. 8, the second terminal body 252 may have a third body segment 2521 and a fourth body segment 2522, where the fourth body segment 2522 may be sleeved outside the third body segment 2521, the thickness of the third body segment 2521 may be greater than the thickness of the fourth body segment 2522, and the third body segment 2521 may be formed with the second welding region 2523. The first terminal body 251 may have a first body segment 2511 and a second body segment 2512, where the first body segment 2511 may be sleeved outside the second body segment 2512, the thickness of the first body segment 2511 may be greater than the thickness of the second body segment 2512, and the first body segment 2511 may be formed with the first welding region 2513. Along a direction perpendicular to the thickness direction (that is, the Z direction shown in FIG. 7) of the first wall 21, the second welding region 2523 is located at the central position of the second terminal body 252, and the first welding region 2513 is located outside the second welding region 2523.

In the above technical solution, by making the second welding region 2523 located at the central position of the second terminal body 252 and the first welding region 2513 located outside the second welding region 2523, the arrangement positions of the second welding region 2523 and the first welding region 2513 can be reasonable, the first welding region 2513 and the second welding region 2523 can be offset along a direction perpendicular to the thickness direction of the first wall 21, thereby reducing the thickness of the electrode terminal 25, which is conducive to reducing the production cost of the battery cell 20 and is conducive to increasing the electric capacity of the battery cell 20.

According to some embodiments of the present application, along the thickness direction of the first wall 21, the orthographic projection of the first welding region 2513 is arranged to surround the orthographic projection of the second welding region 2523.

Setting a plane perpendicular to the thickness direction (that is, the Z direction shown in FIG. 7) of the first wall 21, along the thickness direction (that is, the Z direction shown in FIG. 7) of the first wall 21, both the second welding region 2523 and the first welding region 2513 have orthographic projections on the plane, and the orthographic projection of the first welding region 2513 may surround the orthographic projection of the second welding region 2523.

As some embodiments of the present application, a plurality of first welding regions 2513 may be provided. For example, the number of the first welding regions 2513 may be, but is not limited to, two, three, four, and the like. The orthographic projections of the plurality of first welding regions 2513 on the plane may surround the orthographic projection of the second welding region 2523 on the plane. As some embodiments of the present application, one first welding region 2513 may also be provided, the orthographic projection of the first welding region 2513 on the plane may be in an annular shape, where the annular shape can be understood as, but not limited to, a circular ring shape, a polygonal shape, and the like. The annular shape may be a closed annular or an annular with a notch. The annular orthographic projection of the first welding region 2513 on the plane may surround the orthographic projection of the second welding region 2523 on the plane. As some embodiments of the present application, one or more second welding regions 2523 may be provided. For example, the number of the second welding regions 2523 may be, but is not limited to, one, two, three, four, and the like.

In the above technical solution, by making the orthographic projection of the first welding region 2513 surround the orthographic projection of the second welding region 2523, the arrangement positions of the second welding region 2523 and the first welding region 2513 can be reasonable, and the first welding region 2513 and the second welding region 2523 can be offset along a direction perpendicular to the thickness direction of the first wall 21, thereby reducing the thickness of the electrode terminal 25, which is conducive to reducing the production cost of the battery cell 20 and is conducive to increasing the electric capacity of the battery cell 20. In addition, such arrangement can facilitate connecting the electrode terminal 25 to the adapting member 24 and the busbar 30, which is conducive to reducing the manufacturing difficulty of the battery cell 20 and is conducive to reducing the connection difficulty between the battery cell 20 and the busbar 30.

According to some embodiments of the present application, the second welding region 2523 is constructed as a linear shape, two first welding regions 2513 are provided, and along a direction perpendicular to the thickness direction of the first wall 21, the two first welding regions 2513 are located on opposite sides of the second welding region 2523.

Setting a plane perpendicular to the thickness direction (that is, the Z direction shown in FIG. 7) of the first wall 21, along the thickness direction (that is, the Z direction shown in FIG. 7) of the first wall 21, both the second welding region 2523 and the two first welding regions 2513 have orthographic projections on the plane, and the orthographic projections of the two first welding regions 2513 on the plane are located on opposite sides of the orthographic projection of the second welding region 2523 on the plane. For example, the orthographic projections of the two first welding regions 2513 on the plane are respectively located on the upper and lower sides of the orthographic projection of the second welding region 2523 on the plane, or the orthographic projections of the two first welding regions 2513 on the plane are respectively located on the left and right sides of the orthographic projection of the second welding region 2523 on the plane.

As some embodiments of the present application, the orthographic projection of the second welding region 2523 on the plane may be linear shape, where the linear shape can be understood as, but not limited to a rectangle with a relatively high length-to-width ratio extending along a certain direction, an ellipse with a relatively high major-to-minor axis ratio extending along a certain direction, or the like. As some embodiments of the present application, the orthographic projection of at least one of the two first welding regions 2513 on the plane may be, but is not limited to, an arc shape, a semicircular shape, and the like.

In the above technical solution, by constructing the second welding region 2523 as a linear shape and making the two first welding regions 2513 located on opposite sides of the second welding region 2523, the shape of the second welding region 2523 can be reasonable, the arrangement positions of the second welding region 2523 and the first welding regions 2513 can be reasonable, thereby effectively reducing the influence of welding the electrode terminal 25 to one of the adapting member 24 and the busbar 30 on the connection between the electrode terminal 25 and the other of the adapting member 24 and the busbar 30. In addition, such arrangement can reduce the thickness of the electrode terminal 25, which is conducive to reducing the production cost of the battery cell 20 and is conducive to increasing the electric capacity of the battery cell 20.

According to some embodiments of the present application, referring to FIG. 7, along a direction perpendicular to the thickness direction of the first wall 21, the first welding region 2513 is located at a central position of the first terminal body 251, and the second welding region 2523 is located outside the first welding region 2513.

Setting a plane perpendicular to the thickness direction (that is, the Z direction shown in FIG. 7) of the first wall 21, along the thickness direction (that is, the Z direction shown in FIG. 7) of the first wall 21, the second welding region 2523, the first terminal body 251, and the first welding region 2513 all have orthographic projections on the plane. Along a direction perpendicular to the thickness direction (that is, the Z direction shown in FIG. 7) of the first wall 21, the orthographic projection of the first welding region 2513 on the plane is located at the central position of the orthographic projection of the first terminal body 251 on the plane, and the orthographic projection of the second welding region 2523 on the plane is located outside the orthographic projection of the first welding region 2513 on the plane.

As some embodiments of the present application, referring to FIG. 7, the first terminal body 251 may have a first body segment 2511 and a second body segment 2512, where the second body segment 2512 may be sleeved outside the first body segment 2511, the thickness of the first body segment 2511 may be greater than the thickness of the second body segment 2512, and the first body segment 2511 may be formed with the first welding region 2513. The second terminal body 252 may have a third body segment 2521 and a fourth body segment 2522, where the third body segment 2521 may be sleeved outside the fourth body segment 2522, the thickness of the third body segment 2521 may be greater than the thickness of the fourth body segment 2522, and the third body segment 2521 may be formed with the second welding region 2523. In addition, along a direction perpendicular to the thickness direction (that is, the Z direction shown in FIG. 7) of the first wall 21, the first welding region 2513 is located at the central position of the first terminal body 251, and the second welding region 2523 is located outside the first welding region 2513.

In the above technical solution, by making the first welding region 2513 located at the central position of the first terminal body 251 and the second welding region 2523 located outside the first welding region 2513, the arrangement positions of the second welding region 2523 and the first welding region 2513 can be reasonable, the first welding region 2513 and the second welding region 2523 can be offset along a direction perpendicular to the thickness direction of the first wall 21, thereby reducing the thickness of the electrode terminal 25, which is conducive to reducing the production cost of the battery cell 20 and is conducive to increasing the electric capacity of the battery cell 20.

According to some embodiments of the present application, along the thickness direction of the first wall 21, the orthographic projection of the second welding region 2523 is arranged to surround the orthographic projection of the first welding region 2513.

Setting a plane perpendicular to the thickness direction (that is, the Z direction shown in FIG. 7) of the first wall 21, along the thickness direction (that is, the Z direction shown in FIG. 7) of the first wall 21, both the second welding region 2523 and the first welding region 2513 have orthographic projections on the plane, and the orthographic projection of the second welding region 2523 may surround the orthographic projection of the first welding region 2513. As some embodiments of the present application, a plurality of second welding regions 2523 may be provided. For example, the number of the second welding regions 2523 may be, but is not limited to, two, three, four, and the like. The orthographic projections of the plurality of second welding regions 2523 on the plane may surround the orthographic projection of the first welding region 2513 on the plane. As some embodiments of the present application, one second welding region 2523 may also be provided, the orthographic projection of the second welding region 2523 on the plane may be in an annular shape, where the annular shape can be understood as, but not limited to, a circular ring shape, a polygonal shape, and the like. The annular shape may be a closed annular or an annular with a notch. The annular orthographic projection of the second welding region 2523 on the plane may surround the orthographic projection of the first welding region 2513 on the plane. As some embodiments of the present application, one or more first welding regions 2513 may be provided. For example, the number of the first welding regions 2513 may be, but is not limited to, one, two, three, four, and the like.

In the above technical solution, by making the orthographic projection of the second welding region 2523 surround the orthographic projection of the first welding region 2513, the arrangement positions of the second welding region 2523 and the first welding region 2513 can be reasonable, and the first welding region 2513 and the second welding region 2523 can be offset along a direction perpendicular to the thickness direction of the first wall 21, thereby reducing the thickness of the electrode terminal 25, which is conducive to reducing the production cost of the battery cell 20 and is conducive to increasing the electric capacity of the battery cell 20. In addition, such arrangement can facilitate connecting the electrode terminal 25 to the adapting member 24 and the busbar 30, which is conducive to reducing the manufacturing difficulty of the battery cell 20 and is conducive to reducing the connection difficulty between the battery cell 20 and the busbar 30.

According to some embodiments of the present application, referring to FIG. 7 to FIG. 9, a surface of the first terminal body 251 facing away from the second terminal body 252 has the first welding region 2513, and a surface of the second terminal body 252 facing away from the first terminal body 251 has the second welding region 2523.

As some embodiments of the present application, along the thickness direction (that is, the Z direction shown in FIG. 7) of the first wall 21, the busbar 30, the electrode terminal 25, and the adapting member 24 may be sequentially arranged, and specifically, the busbar 30, the first terminal body 251, the second terminal body 252, and the adapting member 24 may be sequentially arranged. A surface of the first terminal body 251 facing away from the second terminal body 252 may have the first welding region 2513 (that is, an upper surface of the first terminal body 251 may have the first welding region 2513, that is, the surface of the first terminal body 251 facing the busbar 30 may have the first welding region 2513), and the first welding region 2513 corresponds to the first weld pool region 40. A surface of the second terminal body 252 facing away from the first terminal body 251 may have the second welding region 2523 (that is, a lower surface of the second terminal body 252 may have the second welding region 2523, that is, the surface of the second terminal body 252 facing the adapting member 24 may have the second welding region 2523), and the second welding region 2523 corresponds to the second weld pool region 41.

As some embodiments of the present application, the first terminal body 251 may have a connected first body segment 2511 and second body segment 2512. The first body segment 2511 and the second body segment 2512 may be arranged along a direction perpendicular to the thickness direction (that is, the Z direction shown in FIG. 7) of the first wall 21. Along the thickness direction (that is, the Z direction shown in FIG. 7) of the first wall 21, the thickness of the first body segment 2511 may be greater than the thickness of the second body segment 2512, and a surface of the first body segment 2511 facing away from the second terminal body 252 may have the first welding region 2513.

The second terminal body 252 may have a connected third body segment 2521 and fourth body segment 2522. The third body segment 2521 and the fourth body segment 2522 may be arranged along a direction perpendicular to the thickness direction (that is, the Z direction shown in FIG. 7) of the first wall 21. Along the thickness direction (that is, the Z direction shown in FIG. 7) of the first wall 21, the thickness of the third body segment 2521 may be greater than the thickness of the fourth body segment 2522, a surface of the third body segment 2521 facing away from the first terminal body 251 may have the second welding region 2523, and the first welding region 2513 and the second welding region 2523 are offset along a direction perpendicular to the thickness direction (that is, the Z direction shown in FIG. 7) of the first wall 21.

In the above technical solution, by making a surface of the first terminal body 251 facing away from the second terminal body 252 have the first welding region 2513 and a surface of the second terminal body 252 facing away from the first terminal body 251 have the second welding region 2523, the arrangement positions of the first welding region 2513 and the second welding region 2523 can be reasonable, which can facilitate connecting the electrode terminal 25 to the adapting member 24 and the busbar 30, and is conducive to reducing the manufacturing difficulty of the battery cell 20 and is conducive to improving the connection efficiency between the battery cell 20 and the busbar 30, thereby facilitating improvement of production tempo.

As some embodiments of the present application, a side surface of the first terminal body 251 may have the first welding region 2513, the first welding region 2513 corresponds to the first weld pool region 40, and an included angle is provided between the side surface of the first terminal body 251 and the surface of the first terminal body 251 facing away from the second terminal body 252. As some embodiments of the present application, the side surface of the first terminal body 251 is perpendicular to the surface of the first terminal body 251 facing away from the second terminal body 252.

As some embodiments of the present application, a side surface of the first terminal body 251 may have a part of the first welding region 2513, and the surface of the first terminal body 251 facing away from the second terminal body 252 may have another part of the first welding region 2513, where the first welding region 2513 corresponds to the first weld pool region 40.

Such arrangement can facilitate connecting the electrode terminal 25 to the busbar 30 through the first weld pool region 40, which is conducive to improving the connection efficiency between the battery cell 20 and the busbar 30, thereby facilitating improvement of production tempo.

As some embodiments of the present application, a side surface of the second terminal body 252 may have the second welding region 2523, the second welding region 2523 corresponds to the second weld pool region 41, and an included angle is provided between the side surface of the second terminal body 252 and the surface of the second terminal body 252 facing away from the first terminal body 251. As some embodiments of the present application, the side surface of the second terminal body 252 is perpendicular to the surface of the second terminal body 252 facing away from the first terminal body 251.

As some embodiments of the present application, a side surface of the second terminal body 252 may have a part of the second welding region 2523, and the surface of the second terminal body 252 facing away from the first terminal body 251 may have another part of the second welding region 2523, where the second welding region 2523 corresponds to the second weld pool region 41.

Such arrangement can facilitate connecting the electrode terminal 25 to the adapting member 24 through the second weld pool region 41, which is conducive to improving the connection efficiency between the electrode terminal 25 and the adapting member 24, thereby facilitating improvement of production tempo.

According to some embodiments of the present application, referring to FIG. 7 to FIG. 9, a surface of the first terminal body 251 facing the second terminal body 252 has one of a recess structure 2524 and a boss structure 2514, a surface of the second terminal body 252 facing the first terminal body 251 has the other of the recess structure 2524 and the boss structure 2514, and the boss structure 2514 is assembled in the recess structure 2524.

As some embodiments of the present application, referring to FIG. 7, a surface of the first terminal body 251 facing the second terminal body 252 may have a boss structure 2514, and a surface of the second terminal body 252 facing the first terminal body 251 may have a recess structure 2524, where the boss structure 2514 may correspond to the recess structure 2524, and the boss structure 2514 may be assembled in the recess structure 2524.

As a specific embodiment, referring to FIG. 7, the first terminal body 251 may have a connected first body segment 2511 and second body segment 2512. The first body segment 2511 and the second body segment 2512 may be arranged along a direction perpendicular to the thickness direction (that is, the Z direction shown in FIG. 7) of the first wall 21. A surface of the first body segment 2511 facing the second terminal body 252 may have a boss structure 2514, so that the thickness of the first body segment 2511 is greater than the thickness of the second body segment 2512. The second terminal body 252 may have a connected third body segment 2521 and fourth body segment 2522. The third body segment 2521 and the fourth body segment 2522 may be arranged along a direction perpendicular to the thickness direction (that is, the Z direction shown in FIG. 7) of the first wall 21. A surface of the fourth body segment 2522 facing the first terminal body 251 may have a recess structure 2524, so that the thickness of the third body segment 2521 is greater than the thickness of the fourth body segment 2522. A surface of the first body segment 2511 facing away from the second terminal body 252 has the first welding region 2513, and a surface of the third body segment 2521 facing away from the first terminal body 251 has the second welding region 2523.

As some embodiments of the present application, referring to FIG. 8, a surface of the first terminal body 251 facing the second terminal body 252 may have a recess structure 2524, and a surface of the second terminal body 252 facing the first terminal body 251 may have a boss structure 2514, where the boss structure 2514 may correspond to the recess structure 2524, and the boss structure 2514 may be assembled in the recess structure 2524.

As a specific embodiment, referring to FIG. 8, the first terminal body 251 may have a connected first body segment 2511 and second body segment 2512. The first body segment 2511 and the second body segment 2512 may be arranged along a direction perpendicular to the thickness direction (that is, the Z direction shown in FIG. 7) of the first wall 21. A surface of the second body segment 2512 facing the second terminal body 252 may have a recess structure 2524, so that the thickness of the first body segment 2511 is greater than the thickness of the second body segment 2512. The second terminal body 252 may have a connected third body segment 2521 and fourth body segment 2522. The third body segment 2521 and the fourth body segment 2522 may be arranged along a direction perpendicular to the thickness direction (that is, the Z direction shown in FIG. 7) of the first wall 21. A surface of the third body segment 2521 facing the first terminal body 251 may have a boss structure 2514, so that the thickness of the third body segment 2521 is greater than the thickness of the fourth body segment 2522. A surface of the first body segment 2511 facing away from the second terminal body 252 has the first welding region 2513, and a surface of the third body segment 2521 facing away from the first terminal body 251 has the second welding region 2523.

In the above technical solution, by making the first terminal body 251 and the second terminal body 252 respectively have a boss structure 2514 and a recess structure 2524, the boss structure 2514 and the recess structure 2524 can serve a positioning function to facilitate the assembly of the first terminal body 251 and the second terminal body 252 together. In addition, the boss structure 2514 and the recess structure 2524 can also serve a limiting function to reduce the probability of relative displacement of the first terminal body 251 and the second terminal body 252 along a direction perpendicular to the thickness direction (that is, the Z direction shown in FIG. 7) of the first wall 21. In addition, such arrangement can also locally increase the thickness of the first terminal body 251 and the second terminal body 252, which is conducive to improving the connection quality between the electrode terminal 25 and the adapting member 24 and the busbar 30.

According to some embodiments of the present application, referring to FIG. 9, the first terminal body 251 has a through-hole structure 2515 running through the first terminal body 251 along the thickness direction of the first wall 21.

Referring to FIG. 9, along the thickness direction (that is, the Z direction shown in FIG. 7) of the first wall 21, the through-hole structure 2515 may run through the first terminal body 251. As some embodiments of the present application, the first terminal body 251 may have a connected first body segment 2511 and second body segment 2512. Along a direction perpendicular to the thickness direction (that is, the Z direction shown in FIG. 7) of the first wall 21, the second body segment 2512 may be sleeved outside the first body segment 2511, and the first body segment 2511 may have the through-hole structure 2515.

As some embodiments of the present application, referring to FIG. 9, the second terminal body 252 may have a connected third body segment 2521 and fourth body segment 2522. The third body segment 2521 and the fourth body segment 2522 may be arranged along a direction perpendicular to the thickness direction (that is, the Z direction shown in FIG. 7) of the first wall 21, and part of the structure of the third body segment 2521 may be located in the through-hole structure 2515.

In the above technical solution, by making the first terminal body 251 have a through-hole structure 2515 running through the first terminal body 251 along the thickness direction of the first wall 21, material can be saved, thereby facilitating reduction of the production cost of the electrode terminal 25. In addition, by making part of the structure of the third body segment 2521 of the second terminal body 252 located in the through-hole structure 2515, it can facilitate assembling the first terminal body 251 and the second terminal body 252 together.

According to some embodiments of the present application, the electrode terminal 25 is a negative electrode terminal 253.

As some embodiments of the present application, referring to FIG. 3 and FIG. 4, the battery cell 20 may include a positive electrode terminal 254 and a negative electrode terminal 253, where both the positive electrode terminal 254 and the negative electrode terminal 253 may be disposed on the first wall 21 of the battery cell 20, and the electrode terminal 25 described herein may be the negative electrode terminal 253 of the battery cell 20.

In the above technical solution, by making the electrode terminal 25 a negative electrode terminal 253, the thickness of the negative electrode terminal 253 can be reduced without affecting the connection quality between the negative electrode terminal 253 and the adapting member 24 and the busbar 30, thereby facilitating reduction of the production cost of the battery cell 20 and increasing the electric capacity of the battery cell 20.

As some embodiments of the present application, the electrode terminal 25 described herein may also be the positive electrode terminal 254.

According to some embodiments of the present application, the materials of the first terminal body 251 and the second terminal body 252 are different.

For example, the material of the first terminal body 251 may be aluminum (that is, the first terminal body 251 may be constructed as an aluminum piece), and the material of the second terminal body 252 may be copper (that is, the second terminal body 252 may be constructed as a copper piece). Alternatively, the material of the first terminal body 251 may be aluminum (that is, the first terminal body 251 may be constructed as an aluminum piece), and the material of the second terminal body 252 may be nickel (that is, the second terminal body 252 may be constructed as a nickel piece).

In the above technical solution, by making the materials of the first terminal body 251 and the second terminal body 252 different, the materials of the adapting member 24 and the busbar 30 can be adapted, which is conducive to improving the connection stability between the electrode terminal 25 and the adapting member 24 and the busbar 30.

According to some embodiments of the present application, the first terminal body 251 is constructed as an aluminum piece, and the second terminal body 252 is constructed as a copper piece.

That is, the material of the first terminal body 251 may be aluminum, and the material of the second terminal body 252 may be copper. Copper and aluminum have stable chemical properties and are not prone to corrosion. In addition, copper and aluminum have good electrical conductivity, which can effectively transmit current and reduce resistance and energy loss. Moreover, the costs of copper and aluminum are relatively low, which is conducive to reducing production costs and suitable for large-scale production. In addition, copper and aluminum have good processing performance and are relatively easy to manufacture into electrode terminals 25 of various shapes and sizes, which can meet the needs of different types of battery cells 20.

In the above technical solution, by constructing the first terminal body 251 as an aluminum piece, and by constructing the second terminal body 252 as a copper piece, it is conducive to improving the reliability in use of the electrode terminal 25 and is conducive to reducing production costs.

According to some embodiments of the present application, the present application further provides a battery 100. The battery 100 includes a plurality of battery cells 20 in the above embodiments and a busbar 30, the busbar 30 being configured to connect the first weld pool regions 40 of the plurality of battery cells 20.

According to some embodiments of the present application, the present application further provides an electric apparatus. The electric apparatus includes the battery cell 20 in the above embodiments, or the electric apparatus includes the battery 100 in the above embodiments, and the battery 100 being configured to provide electrical energy for the electric apparatus.

The electric apparatus may be any of the aforementioned devices or systems using the battery 100.

According to some embodiments of the present application, referring to FIG. 8, the present application provides a battery cell 20. The battery cell 20 includes: a housing 23, an electrode assembly 22, an adapting member 24, and an electrode terminal 25.

The housing 23 is provided with an accommodating cavity 26, and the housing 23 includes a first wall 21. The electrode assembly 22 is provided with a tab, and the electrode assembly 22 may be disposed in the accommodating cavity 26. The electrode terminal 25 is disposed on the first wall 21, the electrode terminal 25 can be connected to a busbar 30 of the battery 100, and the adapting member 24 is configured to connect the tab and the electrode terminal 25, that is, the adapting member 24 can be connected to the tab, and the electrode terminal 25 can be connected to the adapting member 24.

The electrode terminal 25 is formed with a first weld pool region 40 and a second weld pool region 41, where the first weld pool region 40 is configured to connect to the busbar 30, and the second weld pool region 41 is configured to connect to the adapting member 24. The electrode terminal 25 includes a first terminal body 251 and a second terminal body 252 stacked along the thickness direction (that is, the Z direction shown in FIG. 7) of the first wall 21, where the first terminal body 251 is constructed as an aluminum piece, and the second terminal body 252 is constructed as a copper piece.

Referring to FIG. 8, the first terminal body 251 has a connected first body segment 2511 and second body segment 2512. The first body segment 2511 and the second body segment 2512 are arranged along a direction perpendicular to the thickness direction (that is, the Z direction shown in FIG. 7) of the first wall 21. A surface of the first body segment 2511 facing away from the second terminal body 252 has a first welding region 2513, and the first welding region 2513 corresponds to the first weld pool region 40. Along the thickness direction (that is, the Z direction shown in FIG. 7) of the first wall 21, a surface of the second body segment 2512 facing the second terminal body 252 may have a recess structure 2524, and the thickness of the first body segment 2511 is greater than the thickness of the second body segment 2512.

Referring to FIG. 8, the second terminal body 252 has a connected third body segment 2521 and fourth body segment 2522. The third body segment 2521 and the fourth body segment 2522 are arranged along a direction perpendicular to the thickness direction (that is, the Z direction shown in FIG. 7) of the first wall 21. A surface of the third body segment 2521 facing away from the first terminal body 251 has a second welding region 2523, and the second welding region 2523 corresponds to the second weld pool region 41. Along the thickness direction (that is, the Z direction shown in FIG. 7) of the first wall 21, a surface of the third body segment 2521 facing the first terminal body 251 may have a boss structure 2514, the boss structure 2514 may be assembled in the recess structure 2524, and the thickness of the third body segment 2521 is greater than the thickness of the fourth body segment 2522.

Setting a plane perpendicular to the thickness direction (that is, the Z direction shown in FIG. 7) of the first wall 21, along the thickness direction (that is, the Z direction shown in FIG. 7) of the first wall 21, both the first weld pool region 40 and the second weld pool region 41 have orthographic projections on the plane, and the orthographic projection of the first weld pool region 40 surrounds the orthographic projection of the second weld pool region 41, that is, the orthographic projection of the first weld pool region 40 is located outside the orthographic projection of the second weld pool region 41. That is, along the thickness direction of the first wall 21, the orthographic projection of the first weld pool region 40 and the orthographic projection of the second weld pool region 41 are completely offset.

By offsetting the first weld pool region 40 and the second weld pool region 41 along a direction perpendicular to the thickness direction of the first wall 21, the thickness of the electrode terminal 25 can be reduced without affecting the connection quality between the electrode terminal 25 and the adapting member 24 and the busbar 30, thereby facilitating reduction of the production cost of the battery cell 20. In addition, reducing the thickness of the electrode terminal 25 can reduce the installation space required for the electrode terminal 25, which is conducive to increasing the electric capacity of the battery cell 20.

It should be noted that, without conflict, the embodiments and features in the embodiments in the present application may be combined with each other.

The foregoing descriptions are merely preferred embodiments of the present application which are not intended to limit the present application. Persons skilled in the art understand that the present application may have various modifications and variations. Any modifications, equivalent replacements, and improvements made without departing from the spirit and principle of the present application shall fall within the protection scope of the present application.

## Claims

1. A battery cell, comprising:
a housing, provided with an accommodating cavity, the housing comprising a first wall;
an electrode assembly, the electrode assembly being disposed in the accommodating cavity and being provided with a tab;
an electrode terminal, disposed on the first wall, and the electrode terminal being configured to connect to a busbar of a battery; and
an adapting member, the adapting member being configured to connect the tab and the electrode terminal; wherein
the electrode terminal is formed with a first weld pool region and a second weld pool region, the first weld pool region is configured to connect to the busbar, the second weld pool region is connected to the adapting member, and the first weld pool region and the second weld pool region are offset along a direction perpendicular to a thickness direction of the first wall.

2. The battery cell according to claim 1, wherein along the thickness direction of the first wall, an orthographic projection of the first weld pool region and an orthographic projection of the second weld pool region are completely offset.

3. The battery cell according to claim 1, wherein the electrode terminal comprises a first terminal body and a second terminal body stacked along the thickness direction of the first wall, the first terminal body being located on a side of the second terminal body away from the accommodating cavity, a surface of the first terminal body having a first welding region corresponding to the first weld pool region, a surface of the second terminal body having a second welding region corresponding to the second weld pool region, the first welding region and the second welding region being offset along a direction perpendicular to the thickness direction of the first wall; and
the first terminal body having a connected first body segment and second body segment, the first body segment and the second body segment being arranged along a direction perpendicular to the thickness direction of the first wall, a surface of the first body segment being formed with the first welding region, and along the thickness direction of the first wall, a thickness of the first body segment being greater than a thickness of the second body segment.

4. The battery cell according to claim 3, wherein the second terminal body has a connected third body segment and fourth body segment, the third body segment and the fourth body segment being arranged along a direction perpendicular to the thickness direction of the first wall, a surface of the third body segment being formed with the second welding region, and along the thickness direction of the first wall, a thickness of the third body segment being greater than a thickness of the fourth body segment.

5. The battery cell according to claim 4, wherein the thickness of the fourth body segment is greater than or equal to 0.1 mm.

6. The battery cell according to any one of claims 3 to 5, wherein along a direction perpendicular to the thickness direction of the first wall, the second welding region is located at a central position of the second terminal body, and the first welding region is located outside the second welding region.

7. The battery cell according to claim 6, wherein along the thickness direction of the first wall, an orthographic projection of the first welding region is arranged to surround an orthographic projection of the second welding region.

8. The battery cell according to claim 6 or 7, wherein the second welding region is constructed as a linear shape, two first welding regions are provided, and along a direction perpendicular to the thickness direction of the first wall, the two first welding regions are located on opposite sides of the second welding region.

9. The battery cell according to any one of claims 3 to 8, wherein along a direction perpendicular to the thickness direction of the first wall, the first welding region is located at a central position of the first terminal body, and the second welding region is located outside the first welding region.

10. The battery cell according to claim 9, wherein along the thickness direction of the first wall, the orthographic projection of the second welding region is arranged to surround the orthographic projection of the first welding region.

11. The battery cell according to any one of claims 3 to 10, wherein a surface of the first terminal body facing away from the second terminal body has the first welding region, and a surface of the second terminal body facing away from the first terminal body has the second welding region.

12. The battery cell according to any one of claims 3 to 11, wherein a surface of the first terminal body facing the second terminal body has one of a recess structure and a boss structure, a surface of the second terminal body facing the first terminal body has the other of the recess structure and the boss structure, and the boss structure is assembled in the recess structure.

13. The battery cell according to any one of claims 3 to 12, wherein the first terminal body has a through-hole structure running through the first terminal body along the thickness direction of the first wall.

14. The battery cell according to any one of claims 3 to 13, wherein the materials of the first terminal body and the second terminal body are different.

15. The battery cell according to claim 14, wherein the first terminal body is constructed as an aluminum piece, and the second terminal body is constructed as a copper piece.

16. A battery, comprising a plurality of battery cells according to any one of claims 1 to 15 and a busbar, the busbar being configured to connect the first weld pool regions of the plurality of battery cells.

17. An electric apparatus, comprising the battery cell according to any one of claims 1 to 15 or the battery according to claim 14.
